# EUROPÄISCHE PATENTSCHRIFT

(11) **EP 1 051 574 B1**
(45) Veröffentlichungstag und Bekanntmachung des Hinweises auf die Patenterteilung: **17.11.2004**
(21) Anmeldenummer: 99963265.6
(22) Anmeldetag: 27.11.1999
(51) Int. Cl.: F16D 48/08, F16H 61/12

(54) **HYDRAULIKNOTSTEUERUNG FÜR EINE ZWISCHEN EINEM VERBRENNUNGSMOTOR UND EINEM GETRIEBE ANGEORDNETE KUPPLUNG**
EMERGENCY HYDRAULIC CONTROL FOR A CLUTCH ARRANGED BETWEEN AN INTERNAL COMBUSTION ENGINE AND A GEAR BOX
COMMANDE DE SECOURS HYDRAULIQUE POUR EMBRAYAGE MONTE ENTRE UN MOTEUR A COMBUSTION INTERNE ET UNE BOITE DE VITESSES

(30) Priorität: 07.12.1998 DE 19856297
(43) Veröffentlichungstag der Anmeldung: 15.11.2000
(73) Patentinhaber: ROBERT BOSCH GMBH, 70442 Stuttgart (DE)
(72) Erfinder: BAEUERLE, Peter, D-71636 Ludwigsburg (DE)
(86) Internationale Anmeldenummer: PCT/DE1999/003777
(87) Internationale Veröffentlichungsnummer: WO 2000/034678

(56) Entgegenhaltungen:
- EP-A- 0 516 309
- EP-A- 0 763 443
- DE-A- 4 424 790

## Beschreibung

### Stand der Technik

Die Erfindung geht aus von einer Hydrauliknotsteuerung für eine zwischen einem Verbrennungsmotor und einem Getriebe angeordnete Kupplung. Aus der EP 0 728 265 B1 ist eine Hydrauliknotsteuerung für eine zwischen einem Verbrennungsmotor und einem Getriebe angeordnete hydraulisch betätigte Kupplung bekannt. Diese Hydrauliknotsteuerung ist Teil einer elektrohydraulischen Kupplungssteuerung mit mindestens einer von dem Verbrennungsmotor angetriebenen Pumpe zur Speisung wenigstens einer Arbeitsleitung. An der wenigstens einen Arbeitsleitung ist wenigstens eine feste oder veränderliche Drosselstelle angeordnet. Es ist wenigstens ein als Schaltventil ausgebildetes Ventil zur Steuerung der Kupplung zumindest bei einem Ausfall der elektrischen Versorgung der elektrohydraulischen Kupplungssteuerung vorgesehen. Eine erste Steuerleitung ist mit einem ersten Steuereingang des Schaltventils und in Förderrichtung vor der Drosselstelle mit der Arbeitsleitung verbunden. Eine zweite Steuerleitung ist mit einem zweiten Steuereingang des Schaltventils und in Förderrichtung nach der Drosselstelle mit der Arbeitsleitung verbunden.

In der zweiten Steuerleitung ist ferner ein 4/2-Wegeventil vorgesehen, das einen federbelasteten Akkumulator beaufschlagt, der mit einer zur Kupplung führenden Leitung in Verbindung steht. Das Schaltventil steuert ein Kupplungsdruckventil, das über eine Leitung mit der Kupplung in Verbindung steht. In dieser Leitung ist noch eine Drossel mit einem Rückschlagventil vorgesehen. Diese Hydrauliknotsteuerung ist insofern recht aufwendig in ihrem Aufbau. Bei einem Ausfall der elektrischen Versorgung für die Kupplungssteuerung stellt das Kupplungsdruckventil den maximalen Kupplungsdruck ein. Wegen des Akkumulators und der Drossel steigt der Kupplungsdruck nicht schlagartig, sondern langsam, entlang einer festen Rampe an. Diese Anordnung hat zur Folge, daß keine variable Änderung des Anstiegs des Kupplungsdrucks möglich ist, wodurch auch das Schließen der Kupplung nicht variabel ist. Da jedoch in Abhängigkeit von der jeweiligen Anfahrsituation ein variables Schließen der Kupplung gewünscht oder erforderlich ist - als Beispiele seien das Anfahren in einer Steigung oder einem Gefälle genannt - kann das Schließen der Kupplung in manchen Situationen unkomfortabel sein.

### Vorteile der Erfindung

Die erfindungsgemäße Hydrauliknotsteuerung für eine zwischen einem Verbrennungsmotor und einem Getriebe angeordnete hydraulisch betätigte Kupplung mit den Merkmalen des Hauptanspruchs hat demgegenüber den Vorteil, daß durch die Verwendung eines Regelventils zur Steuerung der Kupplung der Aufbau wesentlich einfacher ist und ein variables Schließen der Kupplung möglich ist.

Der Aufbau der Hydrauliknotsteuerung ist besonders einfach, wenn der Arbeitsanschluß des Regelventils über mindestens eine Kupplungsleitung mit der Kupplung verbunden ist und nicht ein weiteres Ventil zur Steuerung der Kupplung beaufschlagt. Die Regelung des Kupplungsdrucks wird besonders vereinfacht durch eine Rückführleitung des ersten Regelventils, das mit der Kupplungsleitung und einem Steuereingang des Regelventils verbunden ist. Insbesondere ist es vorteilhaft, wenn die Rückführleitung mit dem zweiten Steuereingang des Regelventils verbunden ist. Eine definierte Lage des Regelventils läßt sich durch eine Rückstellfeder erreichen, die an einen Steuereingang des Regelventils angeordnet ist. Diese Rückstellfeder kann am ersten oder am zweiten Steuereingang des Regelventils angeordnet sein. Ist der erste Steuereingang des Regelventils elektrisch oder hydraulisch ansteuerbar, so läßt sich das Regelventil auch im Normalbetrieb besonders gut zur Steuerung der Kupplung verwenden, wodurch ein gesondertes Regelventil zur Steuerung der Kupplung im Normalbetrieb entfallen kann. Es ist von Vorteil, wenn die Drosselstelle im Normalbetrieb elektrisch oder hydraulisch wegschaltbar ist und bei Ausfall der elektrischen Versorgung über eine Feder zuschaltbar ist.

Weitere Vorteile und vorteilhafte Weiterbildungen der erfindungsgemäßen Hydrauliknotsteuerung für eine zwischen einem Verbrennungsmotor und einem Getriebe angeordneten hydraulisch betätigte Kupplung ergeben sich aus den Unteransprüchen und der Beschreibung.

### Zeichnung

Ein Ausführungsbeispiel der Erfindung ist in der Zeichnung dargestellt und in der nachfolgenden Beschreibung näher erläutert.

Es zeigen
- Figur 1: eine schematische Darstellung einer Hydrauliknotsteuerung,
- Figur 2: in Diagramm mit verschiedenen Kennlinien über der Zeit beim Schließen einer Kupplung
- Figur 3: eine erste Abwandlung der Hydrauliknotsteuerung nach Figur 1,
- Figur 4: eine zweite Abwandlung der Hydrauliknotsteuerung nach Figur 1 und
- Figur 5: eine dritte Abwandlung der Hydrauliknotsteuerung nach Figur 1.

### Beschreibung des Ausführungsbeispiels

Wird ein Automatikgetriebe ohne Wandler verwendet, so sind von der Anfahrkupplung zusätzliche Funktionen bereitzustellen. Um bei Fahrzeugstillstand ein Abwürgen des Motors zu verhindern, sind Antriebsseite (Motorseite) und Abtriebsseite der Kupplung zu trennen. Gegebenenfalls soll ein definiertes Kupplungsmoment übertragen werden, das bei eingelegter Kupplung ein langsames Anrollen des Fahrzeugs ermöglicht, wie es der Fahrer von einem Wandler als Anfahrelement gewöhnt ist. Während des Anfahrvorgangs soll der Kupplungsschlupf kontinuierlich auf Null zurückgehen. Während des normalen Fahrbetriebs soll die Anfahrkupplung geschlossen bleiben. Gegebenenfalls ist ein begrenzter Kupplungsschlupf zulässig oder wünschenswert. Bei Automatikgetrieben erfolgt die Kupplungsansteuerung in der Regel elektrohydraulisch. Bei einem Ausfall der elektrischen Versorgung fällt auch das elektrische Ansteuersignal für die Kupplungssteuerung aus, weshalb in diesem Fall eine rein hydraulische Kupplungsansteuerung vorzusehen ist, welche die oben genannten zusätzlichen Funktionen erfüllt und keine weiteren kostenintensiven Zusatzbauteile im Getriebe, wie zum Beispiel ein Pitot-Rohr erforderlich macht.

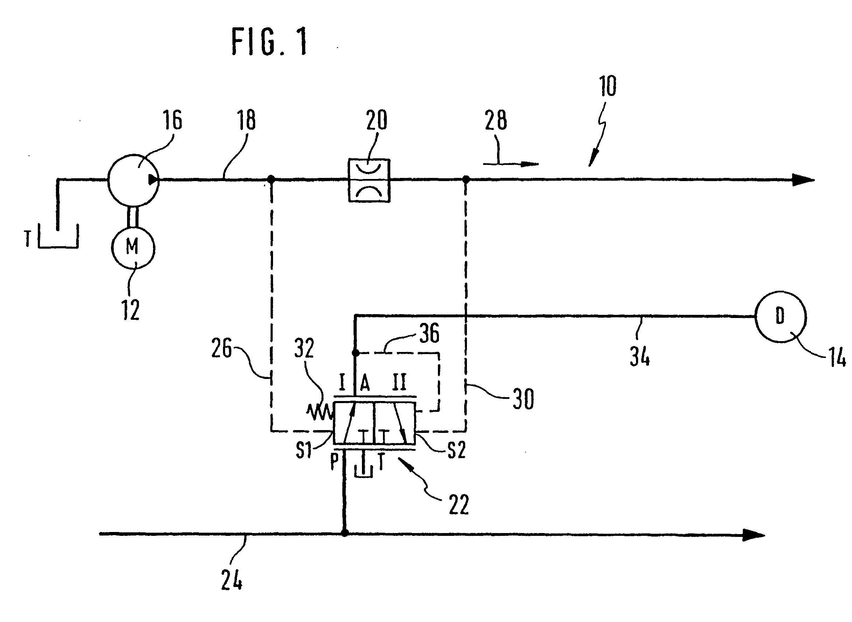

In der Figur 1 ist eine Hydrauliknotsteuerung 10 für eine zwischen einem Verbrennungsmotors 12 und einem nicht dargestellten Getriebe angeordnete, hydraulisch betätigte Kupplung 14 dargestellt, wobei es sich im vorliegenden Ausführungsbeispiel um eine Reibkupplung handelt. Die Hydrauliknotsteuerung 10 ist Teil einer elektrohydraulischen Kupplungssteuerung. Die Hydrauliknotsteuerung 10 weist mindestens eine von dem Verbrennungsmotor 12 angetriebene hydrostatische Pumpe 16 auf, die der Speisung wenigstens einer Arbeitsleitung 18 dient. Das zur Speisung der wenigstens einen Arbeitsleitung 18 erforderliche Hydrauliköl bezieht die Pumpe 16 aus einem Tank T. In der Arbeitsleitung 18 ist eine Drosselstelle 20 angeordnet. Bei der Drosselstelle 20 kann es sich um ein festes oder veränderliches Drosselventil oder eine Blende handeln. Generell sollte sich die Drosselstelle 20 in einer ölführenden Arbeitsleitung 18 befinden, welche direkt von der Pumpe 16 gespeist wird. Dabei muß nicht die gesamte geförderte Pumpenmenge durch diese Arbeitsleitung 18 fließen. Wichtig ist vielmehr, daß während des Anfahrvorgangs der Ölvolumenstrom durch die Leitung 18 als Funktion der Motordrehzahl darstellbar ist und der Ölvolumenstrom mit zunehmender Motordrehzahl stetig ansteigt. Zwischen der Pumpe 16 und der Drosselstelle 20 können beliebig viele andere Ventile angeordnet sein.

Die Hydrauliknotsteuerung 10 weist wenigstens ein als Regelventil 22 ausgebildetes Ventil auf. Das Regelventil 22 dient der Steuerung der Kupplung 14 zumindest bei einem Ausfall der elektrischen Versorgung der elektrohydraulischen Kupplungssteuerung. Das Regelventil 22 weist einen Druckanschluß P auf, an den eine Versorgungsleitung 24 angeschlossen ist. In einer ersten Regelstellung I ist der Druckanschluß P mit dem Arbeitsanschluß A verbunden. Ein Tankanschluß T ist dabei verschlossen. In einer zweiten Regelstellung II ist der Arbeitsanschluß A mit dem Tankanschluß T verbunden. Der Druckanschluß P ist dabei verschlossen.

Die Hydrauliknotsteuerung 10 weist weiterhin eine erste Steuerleitung 26 auf, die mit einem ersten Steuereingang S1 des Regelventils 22 und in Förderrichtung 28 vor der Drosselstelle 20 mit der Arbeitsleitung 18 verbunden ist. Es ist noch eine zweite Steuerleitung 30 vorgesehen, die mit einem zweiten Steuereingang S2 des Regelventils 22 in Förderrichtung 28 nach der Drosselstelle 20 mit der Arbeitsleitung 18 verbunden ist. An einem der Steuereingänge S1, S2 des Regelventils 22 ist eine Rückstellfeder 32 angeordnet. In der in der Figur 1 dargestellten Hydrauliknotsteuerung 10 ist die Rückstellfeder 32 am ersten Steuergang S1 des Regelventils 22 angeordnet.

Der Arbeitsanschluß A des Regelventils 22 ist vorteilhafterweise über mindestens eine Kupplungsleitung 34 mit der Kupplung 14 verbunden. Eine Rückführleitung 36 des Regelventils 22 ist mit der mindestens einen Kupplungsleitung 34 und mit einem Steuereingang, vorteilhafterweise dem zweiten Steuereingang S2, des Regelventils 22 verbunden. Auf diese Weise ist eine einfache Möglichkeit zur Regelung des Drucks in der Kupplungsleitung 34 gegeben. Durch die direkte Verbindung des Regelventils 22 mit der Kupplung 14 ist eine einfache Steuerung der Kupplung 14 ohne zusätzliche Bauteile möglich.

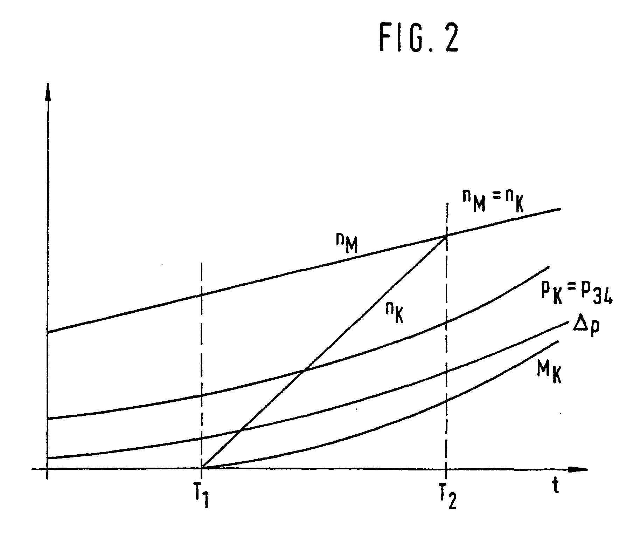

Anhand der Kennlinien im Diagramm der Figur 2 soll die Arbeitsweise der Hydrauliknotsteuerung 10 erläutert werden. Steigt die Motordrehzahl n_{M} über der Zeit t an, insbesondere bei einem Anfahrvorgang, so steigt auch die Fördermenge der Pumpe 16 proportional an. An der Drosselstelle 20 kommt es zu einem Druckabfall Δp. Der Druckanfall Δp entspricht der Differenz des Druckes p₂₆ der ersten Steuerleitung 26 und dem Druck p₃₀ der zweiten Steuerleitung 30. Steigt die Motordrehzahl n_{M} entsprechend der Kennlinie in Figur 2 an, so steigt auch der Druckabfall Δp an. Da der Druck p₂₆ in der Steuerleitung 26 gegenüber dem Druck p₃₀ in der zweiten Steuerleitung 30 immer stärker ansteigt, vergrößert sich am Regelventil 22 in der ersten Regelstellung I der Öffnungsquerschnitt der Verbindung zwischen dem Druckanschluß P und dem Arbeitsanschluß A. Dadurch wird auch ein größerer Druck p₂₄ der Versorgungsleitung 24 auf die Kupplungsleitung 34 und somit auf die Kupplung 14 übertragen. Durch die Rückführleitung 36 wird der Druck p₃₄ auf den zweiten Steuereingang S2 des Regelventils 22 geleitet. Der Druck p₃₄ in der Kupplungsleitung 34 entspricht dem an der Kupplung 14 anstehenden Druck p_{K}. Somit ist also eine einfache Regelung des Drucks p_{K} an der Kupplung 14 möglich.

Ab einem bestimmten Druck p_{K} - im Diagramm der Figur 2 mit dem Zeitpunkt T₁ gekennzeichnet - reicht der Kupplungsdruck p_{K} aus, um ein Drehmoment M_{K} von der Kupplung 14 zu übertragen. Da ein Drehmoment M_{K} von der Kupplung 14 auf ihre Abtriebsseite übertragen wird, beginnt das Fahrzeug sich zu bewegen. Der Beginn des Drehens der Kupplung 14 ist im Diagramm der Figur 2 mit der Kennlinie n_{K}, die der abtriebsseitigen Drehzahl der Kupplung 14 entspricht, dargestellt. Mit weiter zunehmender Motordrehzahl n_{M}, die der eingangsseitigen Drehzahl der Kupplung 14 entspricht, steigt das Druckgefälle Δp an der Drosselstelle 20, wodurch das Regelventil 22 sich weiter öffnet. Dadurch steigt auch der Druck p_{K} an der Kupplung 14 an, bis die Motordrehzahl n_{M} und die abtriebsseitige Drehzahl der Kupplung n_{K} gleich sind. Dies ist im Diagramm der Figur 2 mit dem Zeitpunkt T₂ dargestellt. Zu diesem Zeitpunkt T₂ ist der Schlupf der Kupplungshälften Null.

Durch die Verwendung des Regelventils 22 ist der Anstieg des Drucks p_{K} an der Kupplung 14 in Abhängigkeit vom Anstieg der Motordrehzahl n_{M} regelbar. Dadurch ist ein komfortables Anfahren möglich, wobei das Schließen der Kupplung 14, d.h. die Zeit, in der die Kupplungshälften sich schließen, variabel und an die jeweilige Anfahrsituation angepaßt ist.

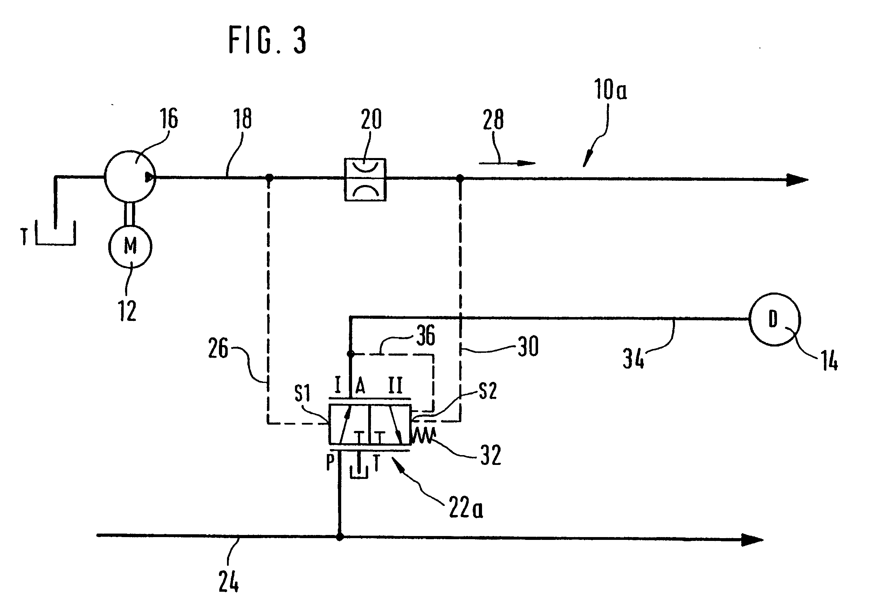

In der Figur 3 ist eine erste abgewandelte Hydrauliknotsteuerung 10a dargestellt. In diesem Fall ist die Rückstellfeder 32 zweckmäßigerweise am zweiten Steuergang S2 des Regelventils 22a angeordnet.

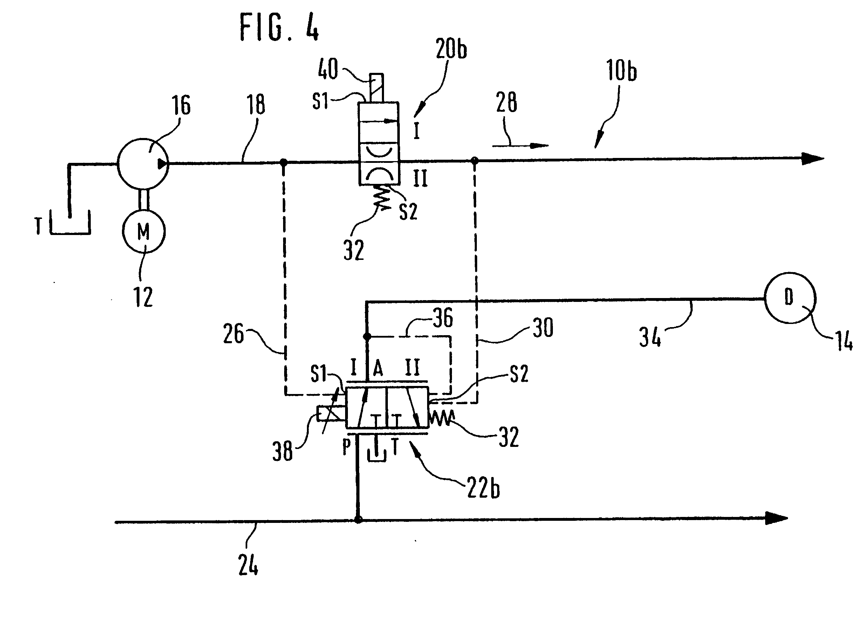

Die zweite abgewandelte Hydrauliknotsteuerung 10b gemäß der Figur 4 weist ein Regelventil 22b auf, an dessen ersten Steuereingang S1 eine elektrische Ansteuerung 38 vorgesehen ist. Alternativ kann die Ansteuerung 38 auch elektrohydraulisch ausgebildet sein. Am zweiten Steuereingang S2 ist eine Rückstellfeder 32 angeordnet. Die Drosselstelle 20b ist als schaltbares Drosselventil ausgeführt, das zwei Schaltstellungen I, II aufweist. Am ersten Steuereingang S1 der Drosselstelle 20b ist eine elektrische oder hydraulische Ansteuerung 40 vorgesehen. Am zweiten Steuereingang S2 ist eine Rückstellfeder 32 angeordnet. In der Schaltstellung I kann das Hydrauliköl ungehindert durch die Arbeitsleitung 18 gefördert werden. In der Schaltstellung II fließt es beispielsweise durch eine Blende.

Im Normalbetrieb ist die Drosselstelle 20b so geschaltet, daß sie sich in der Schaltstellung I befindet, in der das Hydrauliköl ungehindert durchfließen kann. Insofern kommt es an der Drosselstelle 20b auch zu keinem Druckabfall. An den Steuereingängen S1, S2 des Regelventils 22b herrscht somit keine von den Steuerleitungen 26, 30 erzeugte Druckdifferenz durch den Druckabfall Δp vor. Die Steuerung der Kupplung 14 im Normalbetrieb erfolgt dadurch, daß das Regelventil 22b am ersten Steuereingang S1 elektrisch oder hydraulisch ansteuerbar ist.

Bei einem Ausfall der elektrischen Versorgung wird die Drosselstelle 20b durch die Rückstellfeder 32 am zweiten Steuereingang S2 in die Schaltstellung II gebracht. Auch das Ansteuersignal am ersten Steuereingang S1 des Regelventils 22b fällt weg. Die Kupplung 14 kann jedoch wieder durch die nunmehr einsetzende hydraulische Notsteuerung gesteuert werden, wobei an den Steuereingängen S1, S2 des Regelventils 22b wieder die hierzu notwendige durch den Druckabfall Δp erzeugte Druckdifferenz anliegt. Diese Anordnung hat den Vorteil, daß die Kupplung 14 sowohl im Normalbetrieb als auch im Notbetrieb von einem Bauteil - dem Regenventil 22b - steuerbar ist. Das Regelventil 22b kann elektromagnetisch ausgeführt sein und dabei einen Magneten aufweisen, der eine steigende oder eine fallende Kennlinie hat. Anstelle einer Direktansteuerung mit einem Magneten ist auch eine hydraulische Ansteuerung mit einem Vorsteuerventil denkbar.

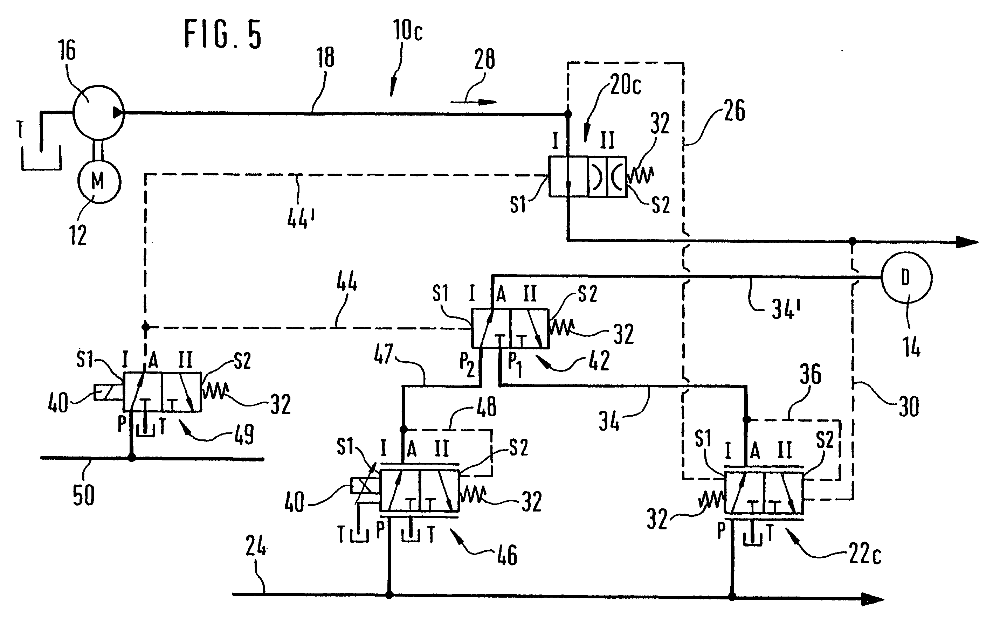

In der Figur 5 ist eine dritte Abwandlung einer Hydrauliknotsteuerung 10c dargestellt. Hierbei ist ein erstes Schaltventil 42 vorgesehen, dessen Arbeitsanschluß A über die Kupplungsleitung 34' mit der Kupplung 14 verbunden ist. Der erste Steuereingang S1 ist im Normalbetrieb hydraulisch ansteuerbar, was im vorliegenden Ausführungsbeispiel über eine Steuerleitung 44 erfolgt. Es ist jedoch auch eine elektrische Ansteuerung vorstellbar. Am zweiten Steuereingang S2 des ersten Schaltventils 42 ist eine Rückstellfeder 32 angeordnet. Das erste Schaltventil 42 weist ferner zwei Druckanschlüsse P₁, P₂ auf. Der Arbeitsanschluß A des Regelventils 22c zur Steuerung der Kupplung 14 bei einem Ausfall der elektrischen Versorgung der elektrohydraulischen Kupplungssteuerung, das dem Regenventil 22 entspricht, ist mit dem ersten Druckanschluß P₁ des ersten Schaltventils 42 verbunden.

Zur Steuerung der Kupplung 14 im Normalbetrieb ist ein zusätzliches Regelventil 46 vorgesehen. Am ersten Steuereingang S1 des zusätzlichen Regelventils 46 ist eine elektrische oder hydraulische Ansteuerung 40 vorgesehen. Am zweiten Steuereingang S2 des zusätzlichen Regelventils 46 ist eine Rückstellfeder 32 angeordnet. Der Arbeitsanschluß A des zusätzlichen Regelventils 46 ist mit dem zweiten Druckanschluß P₂ des ersten Schaltventils 42 verbunden. Der Druckanschluß P des zusätzlichen Regelventils 46 ist mit der Versorgungsleitung 24 verbunden. Am ersten Steuereingang S1 ist noch ein zum Tank T führender Leckanschluß vorgesehen. Die Verbindung vom Arbeitsanschluß A zum zweiten Druckanschluß P₂ des ersten Schaltventils 42 erfolgt über eine Leitung 47. Eine Rückführleitung 48 ist mit der Leitung 47 und dem zweiten Steuereingang des zusätzlichen Regelventils 46 verbunden.

Als Drosselstelle 20c ist ein schaltbares Drosselventil gemäß der Drosselstelle 20b vorgesehen, wobei am ersten Steuereingang S1 der Drosselstelle 20c eine Steuerleitung 44' angeschlossen ist. Die Steuerleitungen 44, 44' sind am Arbeitsanschluß A eines zweiten Schaltventils 49 angeschlossen. Der Arbeitsanschluß A des zweiten Schaltventils 49 ist somit mit dem ersten Steuereingang S1 des ersten Schaltventils 42 und mit dem ersten Steuereingang S1 der Drosselstelle 20c verbunden. Der erste Steuereingang S1 des zweiten Schaltventils 49 weist eine elektrische oder hydraulische Ansteuerung 40 auf, wodurch es auf einfache Weise elektrisch oder hydraulisch ansteuerbar ist. Am zweiten Steuereingang des zweiten Schaltventils 49 ist eine Rückstellfeder 32 vorgesehen. Der Druckanschluß P des zweiten Schaltventils 49 ist mit einer Leitung 50 verbunden. Es ist jedoch alternativ auch ein Anschluß an die Versorgungsleitung 24 denkbar.

Im Normalbetrieb wird das zweite Schaltventil 49 am ersten Steuereingang S1 so angesteuert, daß es sich in der Schaltstellung I befindet. Hierbei sind der Druckanschluß P und der Arbeitsanschluß A miteinander verbunden. Über die Steuerleitung 44' wird die Drosselstelle 20c in ihre Schaltstellung I gebracht. Somit fließt Hydrauliköl ungedrosselt durch die Arbeitsleitung 18 und die Drosselstelle 20c, wodurch an den Steuereingängen S1, S2 des Regelventils 22c weitgehend Druckgleichgewicht herrscht. Der in der Steuerleitung 44 und am ersten Steuereingang S1 des ersten Schaltventils 42 anstehende Druck bringt das erste Schaltventil 42 in die Schaltstellung I. Hierbei ist der zweite Druckanschluß P₂ mit dem Arbeitsanschluß A des ersten Schaltventils 42 verbunden. Auf diese Weise wird die Kupplung 14 im Normalbetrieb über das zusätzliche Regelventil 46 gesteuert.

Bei einem Ausfall der elektrischen Versorgung drückt die Rückstellfeder 32 des zweiten Schaltventils 49 dieses in die Schaltstellung II. Dadurch ist der Arbeitsanschluß A des zweiten Schaltventils 49 mit dem Tankanschluß T verbunden. Somit sind die Steuerleitungen 44, 44' drucklos. Nun werden die Drosselstelle 20c, das erste Schaltventil 42 und das zweite Schaltventil 49 über die jeweilige Rückstellfeder 32 jeweils in die Schaltstellung II gebracht. Am ersten Schaltventil 42 ist der Arbeitsanschluß A nun mit dem ersten Druckanschluß P₁ und somit mit dem Arbeitsanschluß des Regelventils 22c verbunden. An der Drosselstelle 20c kommt es wieder zu einem Druckabfall Δp, wodurch das Regelventil 22c die Steuerung der Kupplung 14 übernimmt.

Die Verwendung eines Regelventils 22 zur Steuerung einer Kupplung 14 zumindest bei einem Ausfall der elektrischen Versorgung der elektrohydraulischen Kupplungssteuerung erlaubt ein variables, den jeweiligen Anfahrsituationen angepaßtes Schließen der Kupplung 14. Mit einem Bauteil lassen sich somit viele Funktionen realisieren.

Besonders der Einsatz bei stufenlos verstellbaren Getrieben (CVT) ist vorteilhaft, da dort bereits eine Drosselstelle in Form einer Meßblende zur Übersetzungsregelung im Notbetrieb eingesetzt werden kann. Mit dieser Drosselstelle zur Übersetzungsregelung im Notbetrieb ist auch ein Schließen der Kupplung 14 bei Ausfall der Ansteuerungselektronik möglich. Dadurch können die Kosten der Hydrauliknotsteuerung niedrig gehalten werden.

## Patentansprüche

1. Hydrauliknotsteuerung (10, 10a, 10b, 10c) für eine zwischen einem Verbrennungsmotor (12) und einem Getriebe angeordnete, hydraulisch betätigte Kupplung (14) als Teil einer elektrohydraulischen Kupplungssteuerung mit mindestens einer von dem Verbrennungsmotor (12) antreibbaren Pumpe (16) zur Speisung wenigstens einer Arbeitsleitung (18), in der wenigstens eine feste oder veränderliche Drosselstelle (20, 20b, 20c) angeordnet ist, mit wenigstens einem Ventil zur Steuerung der Kupplung (14) zumindest bei einem Ausfall der elektrischen Versorgung der elektrohydraulischen Kupplungssteuerung, wobei der Arbeitsanschluß (A) des wenigstens einen Ventils über mindestens eine Kupplungsleitung (34) mit der Kupplung (14) verbindbar ist, mit einer ersten Steuerleitung (26), die mit einem ersten Steuereingang (S1) des wenigstens einen Ventils und in Förderrichtung (28) vor der wenigstens einen Drosselstelle (20, 20b, 20c) mit der wenigstens einen Arbeitsleitung (18) verbunden ist, und mit einer zweiten Steuerleitung (30), die mit einem zweiten Steuereingang (S2) des wenigstens einen Ventils und in Förderrichtung (28) nach der wenigstens einen Drosselstelle (20, 20b, 20c) mit der wenigstens einen Arbeitsleitung (18) verbunden ist, **dadurch gekennzeichnet, daß** das wenigstens eine Ventil zur Steuerung der Kupplung (14) ein Regelventil (22, 22a, 22b, 22c) ist, daß eine Rückführleitung (36) des Regelventils (22, 22a, 22b, 22c) mit der mindestens einen Kupplungsleitung (34) und einem Steuereingang (S1, S2) des Regelventils (22, 22a, 22b, 22c) verbunden ist und daß sich der Öffnungsquerschnitt der Verbindung zwischen dem Druckanschluß (P) und dem Arbeitsanschluß (A) des Regelventils (22) in einer ersten Regelstellung (I) bei einem gegenüber dem Druck (p₃₀) in der zweiten Steuerleitung (30) stärker ansteigenden Druck (p₂₆) in der ersten Steuerleitung (26) vergrößert.

2. Hydrauliknotsteuerung (10, 10a, 10b, 10c) nach Anspruch 1, **dadurch gekennzeichnet, daß** die Rückführleitung (36) mit dem zweiten Steuereingang (S2) des Regelventils (22, 22a, 22b, 22c) verbunden ist.

3. Hydrauliknotsteuerung nach Anspruch 1 oder 2, **dadurch gekennzeichnet, daß** an einem Steuereingang (S1, S2) des Regelventils (22, 22a, 22b, 22c) eine Rückstellfeder (32) angeordnet ist.

4. Hydrauliknotsteuerung (10, 10c) nach Anspruch 3, **dadurch gekennzeichnet, daß** die Rückstellfeder (32) am ersten Steuereingang (S1) des Regelventils (22, 22c) angeordnet ist.

5. Hydrauliknotsteuerung (10a, 10b) nach Anspruch 3, **dadurch gekennzeichnet, daß** die Rückstellfeder (32) am zweiten Steuereingang (S2) des Regelventils (22a, 22b) angeordnet ist.

6. Hydrauliknotsteuerung (10b) nach Anspruch 5, **dadurch gekennzeichnet, daß** das Regelventil (22b) am ersten Steuereingang (S1) zur Steuerung der Kupplung (14) im Normalbetrieb elektrohydraulisch oder elektrisch ansteuerbar ist.

7. Hydrauliknotsteuerung (10b, 10c) nach einem der Ansprüche 1 bis 6, **dadurch gekennzeichnet, daß** die Drosselstelle (20b, 20c) im Normalbetrieb elektrisch oder hydraulisch wegschaltbar ist und bei Ausfall der elektrischen Versorgung über eine Rückstellfeder (32) zuschaltbar ist.

8. Hydrauliknotsteuerung (10c) nach einem der Ansprüche 1 bis 7, **dadurch gekennzeichnet, daß** ein erstes Schaltventil (42) vorgesehen ist, dessen Arbeitsanschluß (A) mit der Kupplung (14) verbunden ist, dessen erster Steuereingang (S1) im Normalbetrieb elektrisch oder hydraulisch ansteuerbar ist, an dessen zweiter Steuereingang (S2) einer Rückstellfeder (32) angeordnet ist und das zwei Druckanschlüsse (P₁, P₂) aufweist, daß der Arbeitsanschluß (A) des Regelventils (22c) zur Steuerung der Kupplung (14) bei Ausfall der elektrischen Versorgung der elektrohydraulischen Grundsteuerung mit dem ersten Druckanschluß (P₁) des ersten Schaltventils (42) verbunden ist und daß zur Steuerung der Kupplung (14) im Normalbetrieb ein zusätzliches Regelventil (46) vorgesehen ist, das an einem ersten Steuereingang (S1) elektrisch oder hydraulisch ansteuerbar ist, an dessen zweitem Steuereingang (S2) eine Rückstellfeder (32) vorgesehen ist und dessen Arbeitsanschluß (A) mit den zweiten Druckanschluß (P₂) des ersten Schaltventils (42) verbunden ist.

9. Hydrauliknotsteuerung (10c) nach Anspruch 8, **dadurch gekennzeichnet, daß** ein zweites Schaltventil (49) vorgesehen ist, dessen erster Steuereingang (S1) elektrisch oder hydraulisch ansteuerbar ist, an dessen zweiten Steuereingang (S2) eine Rückstellfeder (32) vorgesehen ist, und dessen Arbeitsanschluß (A) mit dem ersten Steuereingang (S1) des ersten Schaltventils (42) und mit dem ersten Steuereingang (S1) einer schaltbaren Drosselstelle (20c) verbunden ist.

## Claims

1. Emergency hydraulic controller (10, 10a, 10b, 10c) for a hydraulically activated clutch (14), arranged between an internal combustion engine (12) and a gearbox, as part of an electrohydraulic clutch controller having at least one pump (16) which can be driven by the internal combustion engine (12) in order to feed at least one working line (18) in which at least one fixed or variable throttle point (20, 20b, 20c) is arranged, having at least one valve for controlling the clutch (14) at least in the event of a failure of the electrical supply of the electricohydraulic clutch controller, it being possible to connect the working connection (A) of the at least one valve to the clutch (14) via at least one clutch line (34), having a first control line (26) which is connected to a first control inlet (S1) of the at least one valve and to the at least one working line (18) in the feeding direction (26) upstream of the at least one throttle point (20, 20b, 20c), and having a second control line (30) which is connected to a second control inlet (S2) of the at least one valve and to the at least one working line (18) in the feeding direction (28) downstream of the at least one throttle point (20, 20b, 20c), **characterized in that**, the at least one valve for controlling the clutch (14) is a control valve (22, 22a, 22b, 22c), **in that** a return line (36) of the control valve (22, 22a, 22b, 22c) is connected to the at least one clutch line (34) and one control inlet (S1, S2) of the control valve (22, 22a, 22b, 22c), and **in that**, in a first control position (I), the opening cross section of the connection between the pressure connection (P) and the working connection (A) of the control valve (22) becomes larger when there is a pressure (P₂₆) in the first control line (26) which increases to a greater extent than the pressure (P₃₀) in the second control line (30).

2. Emergency hydraulic controller (10, 10a, 10b, 10c) according to Claim 1, **characterized in that** the return line (36) is connected to the second control inlet (S2) of the control valve (22, 22a, 22b, 22c).

3. Emergency hydraulic controller according to Claim 1 or 2, **characterized in that** a restoring spring (32) is arranged at a control inlet (S1, S2) of the control valve (22, 22a, 22b, 22c).

4. Emergency hydraulic controller (10, 10c) according to Claim 3, **characterized in that** the restoring spring (32) is arranged at the first control inlet (S1) of the control valve (22, 22c).

5. Emergency hydraulic controller (10a, 10b) according to Claim 3, **characterized in that** the restoring spring (32) is arranged at the second control inlet (S2) of the control valve (22a, 22b).

6. Emergency hydraulic controller (10b) according to Claim 5, **characterized in that** the control valve (22b) can be actuated electrohydraulically or electrically at the first control inlet (S1) in order to control the clutch (14) in the normal working mode.

7. Emergency hydraulic controller (10b, 10c) according to one of Claims 1 to 6, **characterized in that** the throttle point (20b, 20c) can be electrically or hydraulically disconnected from the circuit in the normal working mode, and can be connected into the circuit by means of a restoring spring (32) if the electricity supply fails.

8. Emergency hydraulic controller (10c) according to one of Claims 1 to 7, **characterized in that** a first on-off valve (42) is provided, whose working connection (A) is connected to the clutch (14), whose first control inlet (S1) can be actuated electrically or hydraulically in the normal working mode and at whose second control inlet (S2) a restoring spring (32) is arranged and which has two pressure connections (P₁, P₂), **in that** the working connection (A) of the control valve (22c) is connected to the first pressure connection (P₁) of the first on-off valve (42) in order to control the clutch (14) when the electricity supply of the electrohydraulic basic controller fails, and **in that** an additional control valve (46) is provided for controlling the clutch (14) in the normal working mode, which additional control valve (46) can be electrically or hydraulically actuated at a first control inlet (S1) at whose second control inlet (S2) a restoring spring (32) is provided and whose working connection (A) is connected to the second pressure connection (P₂) of the first on-off valve (42).

9. Emergency hydraulic controller (10c) according to Claim 8, **characterized in that** a second on-off valve (49) is provided whose first control inlet (S1) can be electrically or hydraulically actuated, at whose second control inlet (S2) a restoring spring (32) is provided and whose working connection (A) is connected to the first control inlet (S1) of the first on-off valve (42) and to the first control inlet (S1) of a switchable throttle point (20c).

## Revendications

1. Commande de secours hydraulique (10, 10a, 10b, 10c) pour un embrayage (14) à commande hydraulique montée entre un moteur à combustion interne (12) et une transmission, faisant partie d'une commande d'embrayage électro-hydraulique comportant :
- au moins une pompe (16) entraînée par le moteur (12) pour alimenter au moins une conduite de travail (18) dans laquelle se trouve au moins un point d'étranglement fixe ou variable (20, 20b, 20c),
- au moins une soupape pour commander l'embrayage (14) au moins dans le cas de défaillance de l'alimentation électrique de la commande électro-hydraulique d'embrayage, le raccord de travail (A) de l'au moins une soupape pouvant être reliée à l'embrayage (14) par au moins une conduite d'embrayage (34),
- une première conduite de commande (26) qui, par une première entrée de commande (S1) de l'au moins une soupape est, en amont de l'au moins un point d'étranglement (20, 20b, 20c) par rapport à la direction de refoulement (28), reliée avec l'au moins une conduite de travail (18),
- une seconde conduite de commande (30) qui, par l'une seconde entrée de commande (S2) de l'au moins une soupape est, en aval de l'au moins un point d'étranglement (20, 20b, 20c) par rapport à la direction de refoulement (28), reliée avec l'au moins une conduite de travail (18),
**caractérisée en ce que**
- l'au moins une soupape de commande de l'embrayage (14) est une soupape de régulation (22, 22a, 22b, 22c),
- une conduite de retour (36) de la soupape de régulation (22, 22a, 22B, 22c) est reliée à l'au moins une conduite d'embrayage (34) et à une entrée de commande (S1, S2) de la soupape de régulation (22, 22a, 22b, 22c),
- la section de passage de la liaison entre le raccord de pression (P) et le raccord de travail (A) de la soupape de régulation (22), dans une première position de régulation (I) s'agrandit avec une pression (P26) dans la première commande de conduite (26) qui augmente plus fortement que la pression (P30) dans la seconde conduite de commande (30).

2. Commande de secours hydraulique (10, 10a, 10b, 10c) selon la revendication 1,
**caractérisée en ce que**
la conduite de retour (36) est reliée à la seconde entrée de commande (S2) de la soupape de régulation (22, 22a, 22b, 22c).

3. Commande de secours hydraulique selon la revendication 1 ou 2,
**caractérisée en ce qu'**
un ressort de rappel (32) est monté sur une entrée de commande (S1, S2) de la soupape de régulation (22, 22a, 22b, 22c).

4. Commande de secours hydraulique (10, 10c) selon la revendication 3,
**caractérisée en ce que**
le ressort de rappel (32) est monté sur la première entrée de commande (S1) de la soupape de régulation (22, 22c).

5. Commande de secours hydraulique (10a, 10b,) selon la revendication 3,
**caractérisée en ce que**
le ressort de rappel (32) est monté sur la seconde entrée de commande (S2) de la soupape de régulation (22a, 22b).

6. Commande de secours hydraulique (10b,) selon la revendication 5,
**caractérisée en ce que**
la soupape de régulation (22b) montée sur la première entrée de commande (S1) peut, en fonctionnement normal, être actionnée électriquement ou électro-hydrauliquement pour commander l'embrayage (14).

7. Commande de secours hydraulique (10b, 10c) selon une des revendications 1 à 6,
**caractérisée en ce que**
le point d'étranglement (20b, 20c) peut être désactivé électriquement ou hydrauliquement en fonctionnement normal, et être activé par un ressort de rappel en cas de défaillance de l'alimentation électrique.

8. Commande de secours hydraulique (10c) selon une des revendications 1 à 7,
**caractérisée en ce qu'**
- il est prévu une première soupape de commutation (42) dont le raccord de travail (30a) est relié à l'embrayage (14), dont la première entrée de commande (S1) peut être actionnée électriquement ou hydrauliquement en fonctionnement normal, qui porte sur sa seconde entrée de commande (S2) un ressort de rappel (32) et qui présente deux raccords de pression (P1, P2),
- le raccord de travail (A) de la soupape de régulation (22c) servant à commander l'embrayage (14) en cas de défaillance de l'alimentation électrique de la commande électro-hydraulique de base, est relié au premier raccord de pression (P1) de la première soupape de commutation (42), et
- pour commander l'embrayage (14) en fonctionnement normal, il est prévu une soupape de régulation supplémentaire (46) qui peut être commandée sur sa première entrée de commande (S1) électriquement ou hydrauliquement, tandis que sur sa deuxième entrée de commande (S2) est monté un ressort de rappel (32), le raccord de travail (A) de cette soupape (46) étant relié au second raccord de pression (P2) de la première soupape de commutation (42).

9. Commande de secours hydraulique (10c) selon la revendication 8,
**caractérisée en ce qu'**
il est prévu une seconde soupape de commutation (49) dont la première entrée de commande (S1) peut être actionnée électriquement ou hydrauliquement, et dont la seconde entrée de commande est équipée d'un ressort de rappel (32), le raccord de travail (A) de cette soupape (49) étant relié à la première entrée de commande (S1) de la première soupape de commutation (42), et à la première entrée de commande (S1) d'un point d'étranglement (20c) commutable.
